# EUROPÄISCHE PATENTSCHRIFT

(11) **EP 3 009 722 B1**
(45) Veröffentlichungstag und Bekanntmachung des Hinweises auf die Patenterteilung: **31.01.2018**
(21) Anmeldenummer: 15184495.8
(22) Anmeldetag: 09.09.2015
(51) Int. Cl.: F16K 31/68, G05D 23/19, G05D 23/30, F01P 7/16, G05D 23/185

(54) **THERMOSTATVENTIL**
THERMOSTAT VALVE
VANNE THERMOSTATIQUE

(30) Priorität: 25.09.2014 DE 102014219490
(43) Veröffentlichungstag der Anmeldung: 20.04.2016
(73) Patentinhaber: MAHLE Behr Kornwestheim GmbH, 70806 Kornwestheim (DE)
(72) Erfinder: Looser, Hans-Jörg, 73101 Aichelberg (DE); HILLER, Bert, 71384 Weinstadt (DE); SPEER, Tim, 71672 Marbach a. N. (DE)
(74) Vertreter: BRP Renaud & Partner mbB Rechtsanwälte Patentanwälte Steuerberater

(56) Entgegenhaltungen:
- DE-A1- 19 735 058
- DE-A1-102006 044 514
- DE-A1-102008 051 267
- DE-A1-102010 033 564
- DE-T2-602004 004 250
- DE-T2-602005 002 211
- DE-U1- 29 500 897

## Beschreibung

Die vorliegende Erfindung betrifft ein Thermostatventil, insbesondere für einen Kühlkreislauf in einem Kraftfahrzeug. Die Erfindung betrifft außerdem einen Kältekreislauf oder einen Kühlkreislauf mit zumindest einem derartigen Thermostatventil.

Aus der DE 197 35 058 A1 ist ein Kühlsystem für einen Verbrennungsmotor mit einem flüssigen Kühlmittel bekannt, wobei ein Wärmetauscher einer Zusatzeinrichtung mittels eines Schaltventils an den Kreislauf des Kühlmittels angeschlossen ist. Das Schaltventil enthält als Schaltelement ein thermostatisches Arbeitselement, welches in einer Ventilkammer angeordnet ist. An die Ventilkammer, die mittels des Ventilelements gegenüber dem Wärmetauscher der Zusatzeinrichtung absperrbar ist, schließen ein Zulaufanschluss und ein Rücklaufanschluss für das Kühlmittel an, so dass auch bei abgesperrter Verbindung zu dem Wärmetauscher der Zusatzeinrichtung in der Ventilkammer eine Kühlmittelströmung aufrechterhalten bleibt. Hierdurch soll insbesondere die Reaktionszeit des Schaltventils reduziert werden, da durch das strömende Kühlmittel insbesondere ein Abkühlen eines thermostatischen Arbeitselements begünstigt wird.

Thermostatventile sind bereits seit langem bekannt und werden insbesondere zur selbstständigen Temperaturregelung eingesetzt. Hierzu werden in derartigen Thermostatventilen üblicherweise Dehnstoffarbeitselemente verwendet, welche beispielsweise als Wachsdehnelemente ausgebildet sein können. Um ein derartiges Thermostatventil aktiv ansteuern zu können, ist darüber hinaus üblicherweise ein Heizwiderstand vorgesehen, der bei elektrischer Bestromung ein Aufheizen des Wachsdehnelementes bzw. des Dehnstoffarbeitselements und damit ein Ausdehnen desselben, verbunden mit einem Öffnen oder Schließen des Thermostatventils, bewirkt. Der Heizwiderstand wird dabei normalerweise mit einem entsprechenden Kontaktierungssystem in ein Thermostatgehäuseteil mit umspritzter Kontaktbaugruppe montiert. Das Umspritzen der Kontaktbaugruppe im Thermostatgehäuseteil erfordert jedoch ein vergleichsweise aufwändiges Spritzgusswerkzeug. Meist ist für das Umspritzen der Kontakte sogar eine Vorbaugruppe notwendig, was den Herstellungsaufwand nochmals steigert. Außerdem sind an die Maßtoleranzen der Dehnstoffarbeitselementaufnahme hohe Anforderungen gestellt, die einen hohen Aufwand bei der Werkzeugkonstruktion erfordern.

Das Thermostatgehäuseteil hat die Aufgabe, sowohl die elektrische Kontaktierung aufzunehmen als auch die Elementaufnahme bereitzustellen und die kundenspezifische Steckergeometrie darzustellen. Darüber hinaus muss auch eine dampfdichte Abschirmung des Kontaktierungssystems gegenüber dem Kühlmittelkreislauf hergestellt werden können. Als weitere wichtige Anforderung muss die Kunststoffumspritzung der elektrischen Kontakte entsprechende Schutzarten für Motorraumbedingungen erfüllen und das elektrische Kontaktierungssystem gegen Umwelteinflüsse, wie beispielsweise Salzwasser, Hochdruckdampfstrahlen, Wasserdurchfahrten oder ähnliches schützen. Die dampfdichte Umspritzung des elektrischen Kontaktierungssystems wiederum schränkt die Materialauswahl der hierfür einsetzbaren Kunststoffe deutlich ein, so dass beispielsweise lediglich hochwertige und damit auch teure Kunststoffe verwendet werden können und dabei immer das gesamte Thermostatgehäuseteil aus diesem Material herstellt werden muss, obwohl es eigentlich nur im Bereich der Dehnstoffarbeitselementaufnahme erforderlich wäre.

Als weitere Nachteile bei aus dem Stand der Technik bekannten Thermostatventilen haben sich herausgestellt, dass zur Herstellung der elektrischen Kontaktierung oftmals eine aufwändige Unterbaugruppe erforderlich ist, die aus einem Kunststoffvorspritzling und weiteren Bauteilen besteht und in mehreren Fügeprozessen hergestellt werden muss. Bis somit ein komplettes Thermostatgehäuseteil bzw. ein kompletter Thermostatdeckel fertiggestellt ist, sind in den meisten Fällen zwei weitere Umspritzungen erforderlich. Derartige Mehrfachumspritzungen bergen jedoch stets das Risiko von Lufteinschlüssen und Problemstellen, an denen sich die Kunststoffmaterialien nicht verschmelzen, was beides bei dauerhaften Extrembelastungen zu Undichtigkeiten führen kann. Da das Dehnstoffarbeitselement bei herkömmlichen Thermostatventilen oftmals auch nicht formschlüssig mit dem Thermostatgehäuseteil verbunden ist, kann es bei ungünstigen Strömungsverhältnissen aus seinem Dichtsitz verschoben werden. Auch montierte Profildichtungen am Dehnstoffarbeitselement zum Abdichten eines Ventiltellers gegenüber dem Thermostatgehäuseteil bergen einen Nachteil, da eine unterschiedliche Auswahl an Führungen erforderlich ist, da sich die Dichtung bei ungünstigen Strömungsverhältnissen aus der Dichtnut lösen kann. Dies geschieht insbesondere zum Zeitpunkt des Öffnens bzw. Abhebens des Ventiltellers von der Dichtung, wenn aufgrund der geringen Spalte große Strömungsgeschwindigkeiten entstehen. Wenn der Ventilteller soweit angehoben ist, dass die Dichtung gerade am Außendurchmesser frei liegt und vom Ventilteller nicht mehr in die O-Ring-Nut gepresst wird, besteht die Gefahr, dass der Dichtring unterspült und komplett aus der Dichtungsnut ausgehoben wird. Beim Schließen des Ventiltellers entstehen ähnliche Verhältnisse.

Die vorliegende Erfindung beschäftigt sich daher mit dem Problem, für ein Thermostatventil eine verbesserte Ausführungsform anzugeben, welche insbesondere einfacher und dadurch auch kostengünstiger herstellbar ist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, das Thermostatventil erstmals modular aufzubauen, so dass kein aufwändiges Einspritzen beispielsweise des Dehnstoffarbeitselements bzw. dessen elektrischen Kontaktierungssystems in das Thermostatgehäuseteil, verbunden mit dem dafür erforderlichen und aufwändigen Spritzgusswerkzeug mehr notwendig ist. Das erfindungsgemäße Thermostatventil besitzt dabei ein Thermostatgehäuseteil, einen Stecker, eine Steckerhülse sowie ein Dehnstoffarbeitselement mit einem Heizwiderstand. Der Stecker und das Dehnstoffarbeitselement sind über eine dichte, mechanische Steckverbindung in die Steckhülse einsteckbar und bilden zusammen mit dieser eine vorfertigbare Baugruppe, die wiederum über eine dichte, mechanische Steckverbindung in das Thermostatgehäuseteil einsteckbar ist. Der Stecker und der Heizwiderstand des Dehnstoffarbeitselements sind dabei in ineinander eingestecktem Zustand elektrisch leitend miteinander verbunden. Die Herstellung des erfindungsgemäßen Thermostatventils kann deutlich einfacher gestaltet werden, da zunächst beispielsweise der Stecker und das Dehnstoffarbeitselement in die Steckerhülse gesteckt und anschließend diese so vorgefertigte Baugruppe in das Thermostatgehäuseteil eingesetzt wird. Durch das Ineinanderstecken der einzelnen Bestandteile der Baugruppe sind diese bereits dicht, das heißt insbesondere auch dicht gegenüber Kühlmittel, miteinander verbunden und können in diesem Zustand einfach in das Thermostatgehäuseteil, beispielsweise einen Thermostatdeckel, eingebaut werden. Das bisher aufwändige Einspritzen des Dehnstoffarbeitselements bzw. dessen elektrischen Kontakte in das Thermostatgehäuseteil, verbunden mit dem hierfür erforderlichen äußerst komplizierten Spritzgusswerkzeug, kann dadurch entfallen. Mit dem erfindungsgemäßen Thermostatventil kann somit ein modular aufgebautes Thermostatventil geschaffen werden, welches die Materialkosten verringert und zugleich neue Möglichkeit bezüglich der Funktionssicherheit, Prüfbarkeit und Gleichteileverwendung schafft. Kundenspezifische Steckervarianten können dabei flexibel abgebildet werden, indem nur eine Änderung am Stecker erforderlich ist.

Durch den modularen Aufbau können beide Spritzgussteile kunststoffgerecht und spritztechnisch nahezu optimal konstruiert werden. Die Steckerhülse ist dabei derart gestaltet, dass sie das Dehnstoffarbeitselement teilweise oder komplett umschließt und dieses form- oder kraftschlüssig positioniert. Durch die Auswahl geeinigter Kunststoffe sowie beispielsweise eine zusätzliche Dichtung zum Dehnstoffarbeitselement, kann nun eine dampfdichte Abschirmung der elektrischen Kontakte erreicht werden. Die Dichtung zwischen dem Stecker und der Steckerhülse bzw. dem Dehnstoffarbeitselement und der Steckerhülse kann dabei axial oder auch radial-axial-dichtend ausgeführt werden. Die Steckerhülse selbst kann kraft- oder formschlüssige im Thermostatgehäuseteil positioniert werden. Erfindungsgemäß ist dabei am Stecker, an der Steckerhülse und/oder am Dehnstoffarbeitselement jeweils zumindest eine Dichtung vorgesehen ist, welche ein dichtes Miteinanderverbinden und/oder ein dichtes Einstecken der Baugruppe in das Thermostatgehäuseteil ermöglicht.

Zugleich ist die zumindest eine Dichtung erfindungsgemäß als angespritzte Dichtung ausgebildet. Vorzugsweise sind dabei sämtliche Dichtungen an den jeweiligen Bauteilen angespritzt, wobei insbesondere sogar vorgesehen ist, dass sämtliche Dichtungen an die Steckerhülse angespritzt und jeweils durch mindestens eine Dichtlippe ausgebildet sind. Hierfür können ein- und zweistufige K+K-Spritzgießverfahren (Kunststoff + Kautschuk)- zum Einsatz kommen. Bei einem vorteilhaft eingesetzten einstufigen Verfahren werden Hart- und Weichkomponente in einem Werkzeug und in einer Maschine eingespritzt. Ein Haftvermittler wird nicht benötigt. Beim Zweistufigen Verfahren werden die Komponenten an unterschiedlichen Maschinen eingespritzt. Beim zweistufigen Verfahren können Kunststoff/Gummi-Kombinationen zum Einsatz kommen, die sowohl mit als auch ohne Haftvermittler einen Haftverbund erzielen. Die Dichtungen selbst können dabei aus hydriertem Acrylnitrilbutadien-Kautschuk (HNBR), aus Fluorkautschuk (FKM) oder aus Ethylen-Propylen-Dien-Kautschuk (EPDM) ausgebildet sein. Bereits diese nicht abschließende Aufzählung lässt erahnen, welch unterschiedlichste Kunststoffarten für die Dichtungen einsetzbar sind, wobei diese lediglich die für Motorräume erforderlichen Anforderungen, wie beispielsweise Kühlmittelbeständigkeit und Temperaturbeständigkeit auf jeden Fall erfüllen müssen.

Zweckmäßig sind der Stecker und die Steckerhülse als Kunststoffspritzgussteil ausgebildet, insbesondere als Zweikomponenten-Spritzgussteil, wobei die Steckerhülse vorzugsweise aus einem faserverstärkten Kunststoff, insbesondere aus glasfaserverstärktem Polyphthalamid (PPA), Poly-hexamethylendodecandiamid (PA6.12) oder Polyphenylenether (PPE) ausgebildet sein kann. Die Steckerhülse kann dabei für unterschiedlichste Ausführungsformen des Thermostatventils als Gleichteil ausgebildet sein, wogegen die Stecker wiederum individuelle Kundenanforderungen bzw. -wünsche abbilden können.

Bei einer vorteilhaften Weiterbildung der erfindungsgemäßen Lösung weist der Stecker zwei dem Dehnstoffarbeitselement zugewandte erste elektrische Steckkontakte zum Anschluss an den Heizwiderstand des Dehnstoffarbeitselements und zwei von diesem abgewandte zweite elektrische Steckkontakte zum Anschluss beispielsweise an einen Kabelbaum auf. Die ersten und zweiten Steckkontakte können dabei unterschiedlich ausgebildet sein, so dass der Stecker prinzipiell als Adapter dienen kann. Hierbei ist es insbesondere denkbar, dass das Thermostatventil hinsichtlich seiner einzelnen Komponenten bis auf die ersten Steckkontakte bzw. den Stecker gleich ausgebildet ist, so dass lediglich durch eine Variation der ersten Steckkontakte bzw. des Steckers das ansonsten gleich und damit kostengünstig herstellbare Thermostatventil an unterschiedliche Schnittstellen zu unterschiedlichen Kabelbäumen anpassbar ist. Auch können im Stecker unterschiedliche Steckerwinkel, z.B. 180° oder 90° abgebildet werden.

Generell bietet das erfindungsgemäße Thermostatventil folgende Vorteile:
- Die Anforderung an die Schnittstelle wird in zwei Bauteile, nämlich in den Stecker und die Steckerhülse gegliedert, wobei diese dann an jeweils unterschiedliche Umgebungsbedingungen angepasst werden können. An die Steckerhülse sind bezüglich Kühlmittelbeständigkeit, Festigkeit, Maßhaltigkeit und Dichtheit höchste Anforderungen gestellt, die ein vergleichsweise kostenintensives Material erfordern. Durch den modularen Aufbau kann die Verwendung dieses kostenintensiven Materials jedoch auf die Steckerhülse beschränkt werden und muss nicht wie bisher für das gesamte Thermostatgehäuseteil vorgesehen werden.
- Die kundenspezifischen Wünsche bzw. Varianten können auf den Stecker beschränkt werden, so dass die Steckerhülse an sich als Gleichteil in hohen Stückzahlen hergestellt werden kann. Zudem kann auch das Spritzgusswerkzeug für das Thermostatgehäuseteil bzw. den Deckel stark vereinfacht werden, da keine Kontaktierungsbaugruppe mehr eingelegt werden muss.
- Der Stecker steht auch nicht in direktem und dauerhaftem Kontakt mit Kühlmittel und ist frei von hohen mechanischen Belastungen, so dass das hierfür eingesetzte Material kostengünstiger ausgewählt werden kann.
- Die erfindungsgemäße Baugruppe, bestehend aus Stecker, Steckerhülse und den Dehnstoffarbeitselement kann sowohl in Thermostatgehäuseteilen aus Kunststoff als auch aus Metall zum Einsatz kommen.
- Die form- oder haftschlüssig angebrachte Dichtung am Ventilteller ermöglicht es, baugleiche Führungen für den Ventilteller zu Verwenden.
- Ein Anspritzen sämtlicher Dichtungen, insbesondere an die Steckerhülse, ist möglich, wodurch eine Montage separater O-Ringdichtungen entfallen kann.
- Das Dehnstoffarbeitselement kann beispielsweise durch eine Rastverbindung formschlüssig mit der Steckerhülse verbunden und dadurch ein sicherer, insbesondere dampfdichter Dichtmechanismus geschaffen werden.
- Der Montagevorgang und auch die Dichtfunktion zwischen Dehnstoffarbeitselement und Steckerhülse kann über Leckageprüfungen qualifiziert werden, was bislang nicht möglich war, da nach der Montage des Dehnstoffarbeitselements über eine Leckageprüfung die Funktion der Dichtung nicht mehr überprüft werden konnte und dadurch eine eventuelle Beschädigung des Dichtringes nur erschwert detektierbar war.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: eine Schnittdarstellung durch ein erfindungsgemäßes Thermostatventil bei einer ersten Ausführungsform,
- Fig. 2: eine aus einem Stecker, einem Dehnstoffarbeitselement und einer Steckerhülse zusammengesetzte Baugruppe,
- Fig. 3: eine Darstellung wie in Figur 2, jedoch in einer Explosionsdarstellung,
- Fig. 4-6: jeweils Ansichten auf ein Thermostatventil mit unterschiedlichem Stecker,
- Fig. 7: eine Darstellung wie in Figur 1, jedoch mit anders ausgebildetem Stecker,
- Fig. 8: eine Ansicht auf das gemäß der Figur 7, geschnitten dargestellt Thermostatventil,
- Fig. 9: eine Detaildarstellung einer Verbindung eines Heizwiderstands eines Dehnstoffarbeitselements mit einem ersten Steckkontakt des Steckers.

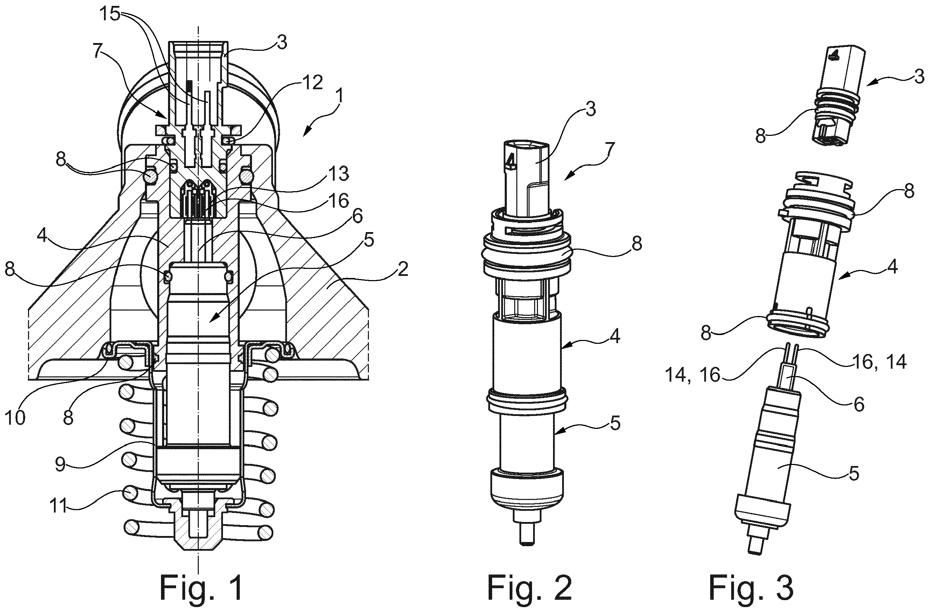

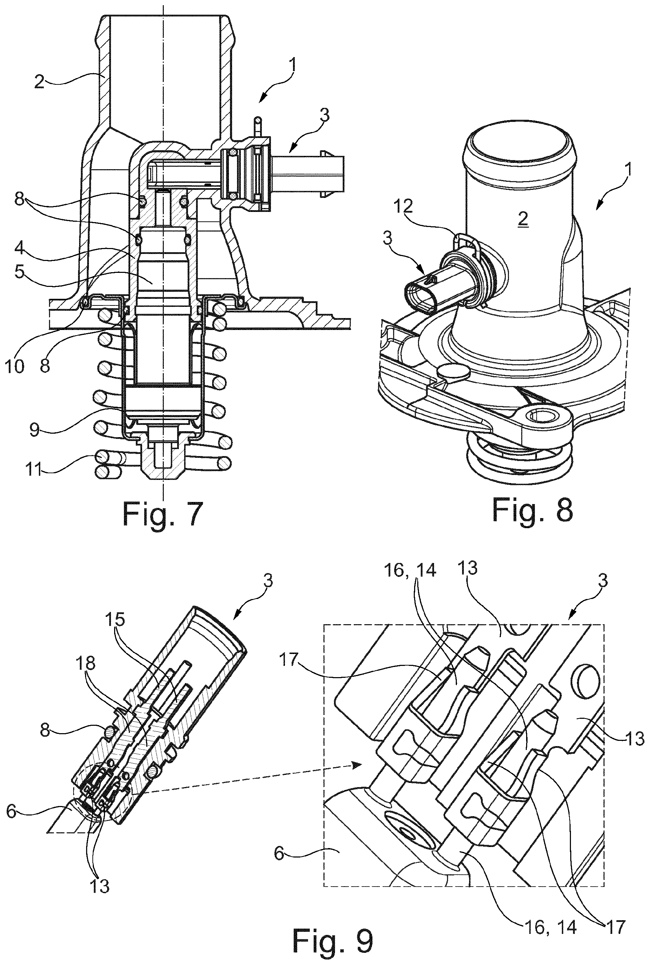

Entsprechend den Figuren 1 und 7, weist ein erfindungsgemäßes Thermostatventil 1, welches beispielsweise in einem Kühlkreislauf eines Kraftfahrzeugs eingesetzt werden kann, ein Thermostatgehäuseteil 2, einen Stecker 3, eine Steckerhülse 4 sowie ein Dehnstoffarbeitselement 5 mit einem Heizwiderstand 6 auf. Der Stecker 3 und das Dehnstoffarbeitselement 5 sind dabei über eine dichte, mechanische Steckverbindung in die Steckhülse 4 einsteckbar und bilden zusammen mit dieser eine Baugruppe 7, wie diese gemäß der Figur 2 und in einer Explosionsdarstellung gemäß der Figur 3 dargestellt ist. Die Baugruppe 7 selbst ist als Ganzes ebenfalls über eine dichte, mechanische Steckverbindung in das Thermostatgehäuseteil 2 einsteckbar. Der Stecker 3 und der Heizwiderstand 6 des Dehnstoffarbeitselements 5 sind dabei in ineinander eingestecktem Zustand elektrisch miteinander verbunden.

Im Unterschied zu aus dem Stand der Technik bekannten Thermostatventilen, ermöglicht somit das erfindungsgemäße Thermostatventil 1 eine separate Ausbildung der Baugruppe 7 und insbesondere eine separate Ausbildung der Steckerhülse 4, so dass der für die Steckerhülse 4 erforderliche qualitativ hochwertige und deshalb auch teurere Kunststoff nicht für das gesamte Thermostatgehäuseteil 2 verwendet werden muss. Bei aus dem Stand der Technik bekannten Thermostatventilen war dies erforderlich, da das Dehnstoffarbeitselement 5 in dem Kunststoff des Thermostatgehäuseteils 2 eingespritzt werden musste.

Betrachtet man die Figuren 1 bis 3 sowie 7, kann man erkennen, dass am Stecker 3, an der Steckerhülse 4 und/oder am Dehnstoffarbeitselement 5 jeweils zumindest eine Dichtung 8 vorgesehen ist, welche ein dichtes Miteinanderverbinden und/oder ein dichtes Einstecken der Baugruppe 7 in das Thermostatgehäuseteil 2 ermöglichen. Das Dehnstoffarbeitselement 5 ist dabei mit einem Schieber 9 und/oder einem Ventilteller 10 antriebsverbunden und ermöglicht dadurch ein temperaturabhängiges Öffnen bzw. Schließen des Thermostatventils 1. Wird das Dehnstoffarbeitselement 5 beispielsweise von heißem Kühlmittel umströmt, so bewirkt dieses heiße Kühlmittel ein Erwärmen des Dehnstoffarbeitselements 5 und damit ein Ausdehnen desselben. Aufgrund der Ausdehnung verstellt das Dehnstoffarbeitselement 5 den Schieber 9 und über diesen den Ventilteller 10 entgegen einer Federkraft einer Feder 11. Durch das Verstellen des Ventiltellers 10 wird dieser von seinem Ventilsitz abgehoben und damit das Ventil geöffnet. Zwischen der Steckerhülse 4 und dem Schieber 9 kann darüber hinaus eine weitere Dichtung 8 angeordnet sein. Die dargestellten Dichtungen 8 sind dabei vorzugsweise als an das jeweilige Bauteil 3 oder 4 angespritzte Dichtung ausgebildet, können jedoch aber auch als separate O-Ringdichtung ausgebildet werden. Für die Dichtung 8 kann beispielsweise ein Kunststoff, insbesondere ein hydrierter Acrylnitrilbutadien-Kautschuk (HNBR), aus Fluorkautschuk (FKM) oder aus Ethylen-Propylen-Dien-Kautschuk (EPDM) verwendet werden.

Der Stecker 3 und die Steckerhülse 4 sind vorzugsweise als Kunststoffspritzgussteil ausgebildet, insbesondere als Zweikomponentenspritzgussteil und dadurch nicht nur kostengünstig, sondern qualitativ auch äußerst hochwertig herstellbar. Um die auf die Steckerhülse 4 einwirkenden, mechanischen Kräfte besser aufnehmen zu können, insbesondere auch langfristig, kann die Steckerhülse 4 auch aus einem faserverstärken Kunststoff, insbesondere aus glasfaserverstärktem Polyphthalamid (PPA), Poly-hexamethylendodecandiamid (PA6.12) oder Polyphenylenether (PPE) ausgebildet sein.

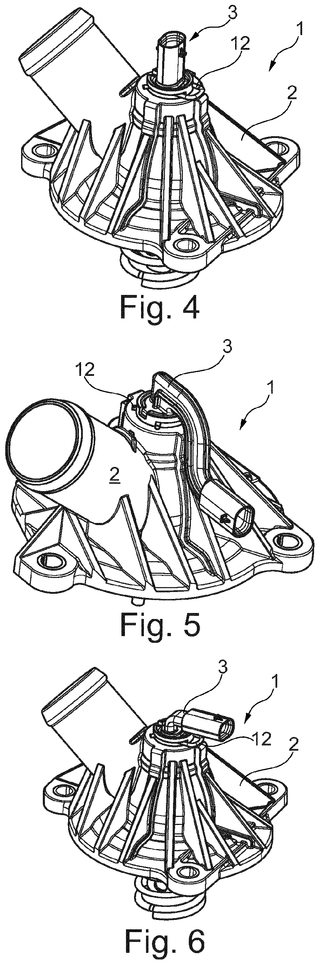

Zur Fixierung der Baugruppe 7 in dem Thermostatgehäuseteil 2 kann beispielsweise die Steckerhülse 4 über eine Rastverbindung oder einen Bajonettverschluss mechanisch in dem Thermostatgehäuseteil 2 fixiert sein. Ebenfalls über eine Rastverbindung können der Stecker 3 und/oder das Dehnstoffelement 5 in der Steckerhülse 4 fixiert werden. Selbstverständlich ist alternativ auch eine reine Klemmverbindung denkbar, bei welcher die Dichtungen 8 als Klemmkörper wirkend. Durch diese Rastverbindungen, insbesondere zwischen dem Stecker 3 und der Steckerhülse 4 bzw. dem Dehnstoffarbeitselement 5 kann die gesamte Baugruppe 7, beispielsweise gemäß der Figur 1, von unten in das Thermostatgehäuseteil 2, welches beispielsweise als Deckel ausgebildet sein kann, eingesteckt und anschließend über einen Federbügel 12 am Thermostatgehäuseteil 2 fixiert werden (vgl. insbesondere auch die Figuren 4 bis 8). Den Fig. 4 bis 6 sind darüber hinaus unterschiedlichste Ausführungsformen des Steckers 3 zu entnehmen, wobei gemäß Fig. 4 der Stecker 3 gleichgerichtet zum Dehnstoffarbeitselement 5 ist, wogegen er gemäß den Fig. 5 und 6 dazu abgewinkelt ist. Gemäß Fig. 5 weist der Stecker 3 zudem noch einen schwanenartigen Hals auf.

Betrachtet man den Stecker 3 genauer, so kann man erkennen, dass dieser zwei dem Dehnstoffarbeitselement 5 zugewandte erste elektrische Steckkontakte 13 zum Anschluss an den Heizwiderstand 6 bzw. an Rundstifte 14 desselben (vgl. Figur 9) aufweist. Darüber hinaus besitzt der Stecker 3 zwei von dem Dehnstoffarbeitselement 5 abgewandte zweite elektrische Steckkontakte 15 zum Anschluss an einen nicht gezeigten Kabelbaum eines Kraftfahrzeugs. Die ersten und beiden Steckkontakte 13 und 15 können dabei unterschiedlich ausgebildet sein, was die Möglichkeit eröffnet, den Stecker 3 prinzipiell als Adapter zu nutzen und damit an unterschiedlichste elektrische Systeme in unterschiedlichsten Kraftfahrzeugen bei ansonsten völlig gleich aufgebauten Thermostatventil 1 anschließen zu können. Betrachtet man nochmals die beiden ersten Steckkontakte 13 gemäß der Figur 9, so kann man erkennen, dass diese jeweils zwei Kontaktfedern 17 aufweisen, in die die am Heizwiderstand 6 angeordneten Rundstecker 16 bzw. Rundstifte 14 elektrisch leitend einsteckbar sind. Der Stecker 3 beinhaltet somit zwei Blechstanzteile 18, die an ihren Längsenden jeweils die ersten und zweiten Steckkontakte 13 und 15 aufweisen.

Generell kann der Stecker 3 auch am Kabelbaum selbst angeordnet sein und zwei dem Dehnstoffarbeitselement 5 zugewandte elektrische Steckkontakte 13,15 zum Anschluss an den Heizwiderstand 6 aufweisen, wobei der Stecker 3 über eine Rastverbindung oder einen Federbügel mechanisch mit der Steckerhülse 4 und/oder dem Thermostatgehäuseteil 2 verbindbar ist.

Das Thermostatgehäuseteil 2 kann beispielsweise aus Kunststoff oder aus Metall ausgebildet sein, wodurch eine weitere erhöhte Flexibilität erreicht werden kann. Der Stecker 3 und das Dehnstoffarbeitselement 5 sind jeweils kraft- und/oder formschlüssig in der Steckerhülse 4 eingesteckt und darüber zuverlässig gehalten. Die Steckerhülse 4 selbst bildet eine kühlmitteldichte Hülle um die eigentliche elektrische Kontaktierung herum und dient zugleich zur Positionierung und Arretierung des Dehnstoffarbeitselements 5 in Bezug auf das Thermostatgehäuseteil 2. Der Stecker 3 ist somit über eine innerhalb und damit dicht in der Steckerhülse 4 angeordnete elektrische Kontaktierung mit dem Heizwiderstand 6 des Dehnstoffarbeitselements 5 verbunden und weist an seinen zweiten elektrischen Steckkontakten 15 die Möglichkeit auf, diese entsprechend der Kundenwünsche auszubilden und damit das erfindungsgemäße Thermostatventil 1 vielseitig einzusetzen. Prinzipiell sind dabei die einzelnen Bauteile 3, 4, 5 der Baugruppe 7 wieder voneinander lösbar, so dass auch eine Demontage möglich ist, wobei üblicherweise das Thermostatventil 1 nach dem Zusammenstecken der Baugruppe 7 und deren Einstecken in das Thermostatgehäuseteil 2 üblicherweise nicht mehr gelöst wird. Durch die Steckverbindungen können nicht nur axiale Bewegungen aufgrund von Temperaturdehnungen aufgenommen werden, sondern zugleich auch in einem Kühlsystem auftretende Druckstöße.

Mit dem erfindungsgemäßen Thermostatventil 1 lässt sich dieses erstmals modular aufbauen und damit deutlich einfacher fertigen, wobei insbesondere bisher erforderliche Mehrfachumspritzungen der elektrischen Kontakte, verbunden mit den dabei entstehenden Fehlermöglichkeiten, vermieden werden können. Bei dem erfindungsgemäßen Thermostatventil 1 muss darüber hinaus nur noch die Steckerhülse 4 aus dem vergleichsweise hochwertigen Kunststoff ausgebildet sein und nicht mehr das gesamte Thermostatgehäuseteil 2, wodurch sich das erfindungsgemäße Thermostatventil 1 insgesamt kostengünstiger herstellen lässt. Die kundenspezifischen Variantenwünsche beschränken sich dabei ausschließlich auf die zweiten elektrischen Steckkontakte 15 des Steckers 3, so dass die übrigen Bestandteile des Thermostatventils 1, insbesondere die Steckerhülse 4, als Gleichteile in hohen Stückzahlen und damit kostengünstig hergestellt werden können. Durch den Wegfall des Umspritzens kann zudem auch ein Spritzgusswerkzeug deutlich einfacher und damit kostengünstiger gestaltet werden, wobei zudem das Herstellen von bisher erforderlichen Kunststoffvorspritzlingen in mehreren Fügeprozessen entfallen kann.

Durch das Anspritzen, vorzugsweise sämtlicher Dichtungen 8 an die jeweiligen Bauteile 3, 4, 5, kann auch der Einsatz bisher erforderlicher, separater O-Ringdichtungen entfallen sowie deren Montage, wodurch sich die Herstellungskosten des erfindungsgemäßen Thermostatventils 1 wiederum reduzieren lassen.

## Patentansprüche

1. Thermostatventil (1),
- mit einem Thermostatgehäuseteil (2), einem Stecker (3), einer Steckerhülse (4) und einem Dehnstoffarbeitselement (5) mit einem Heizwiderstand (6),
- wobei der Stecker (3) und das Dehnstoffarbeitselement (5) jeweils über eine dichte, mechanische Steckverbindung in die Steckerhülse (4) einsteckbar sind und zusammen mit dieser eine Baugruppe (7) bilden, die über eine weitere dichte, mechanische Steckverbindung in das Thermostatgehäuseteil (2) einsteckbar ist,
- wobei der Stecker (3) und der Heizwiderstand (6) in ineinander eingestecktem Zustand elektrisch leitend miteinander verbunden sind,
- wobei am Stecker (3), an der Steckerhülse (4) und/oder am Dehnstoffarbeitselement (5) jeweils zumindest eine Dichtung (8) vorgesehen ist, welche ein dichtes Miteinanderverbinden und/oder ein dichtes Einstecken der Baugruppe (7) in das Thermostatgehäuseteil (2) ermöglicht,
**dadurch gekennzeichnet, dass**
zumindest eine der Dichtungen (8) als angespritzte Dichtung ausgebildet ist.

2. Thermostatventil nach Anspruch 1,
**dadurch gekennzeichnet, dass**
das Dehnstoffarbeitselement (5) mit einem Schieber (9) und/oder einem Ventilteller (10) antriebsverbunden ist, wobei zwischen der Steckerhülse (4) und dem Schieber (9) eine Dichtung (8) angeordnet ist.

3. Thermostatventil nach Anspruch 1 oder 2,
**dadurch gekennzeichnet, dass**
- der Stecker (3) und die Steckerhülse (4) als Kunststoffspritzgussteil ausgebildet sind, insbesondere als Zweikomponentenspritzgussteil, und/oder
- zumindest die Steckerhülse (5) aus einem faserverstärkten Kunststoff, insbesondere aus glasfaserverstärktem Polyphthalamid (PPA), Poly-hexamethylendodecandiamid (PA6.12) oder Polyphenylenether (PPE), ausgebildet ist.

4. Thermostatventil nach einem der Ansprüche 1 bis 3,
**dadurch gekennzeichnet, dass**
zumindest eine Dichtung (8) aus hydriertem Acrylnitrilbutadien-Kautschuk (HNBR), aus Fluorkautschuk (FKM) oder aus Ethylen-Propylen-Dien-Kautschuk (EPDM) ausgebildet ist.

5. Thermostatventil nach einem der vorhergehenden Ansprüche,
**dadurch gekennzeichnet, dass**
- der Stecker (3) und/oder das Dehnstoffarbeitselement (5) über eine Rastverbindung mechanisch in der Steckerhülse (4) fixiert sind, und/oder
- die Steckerhülse (4) über eine Rastverbindung oder einen Bajonettverschluss mechanisch in dem Thermostatgehäuseteil (2) fixiert ist, und/oder
- der Stecker (3) über einen Federbügel (12) mechanisch an dem Thermostatgehäuseteil (2) fixiert ist.

6. Thermostatventil nach einem der vorhergehenden Ansprüche,
**dadurch gekennzeichnet, dass**
der Stecker (3) zwei dem Dehnstoffarbeitselement (5) zugewandte erste elektrische Steckkontakte (13) zum Anschluss an den Heizwiderstand (6) des Dehnstoffarbeitselements (5) und zwei von diesem abgewandte zweite elektrische Steckkontakte (15) zum Anschluss an einen Kabelbaum aufweist.

7. Thermostatventil nach einem der Ansprüche 1 bis 6,
**dadurch gekennzeichnet, dass**
der Stecker (3) an einem Kabelbaum angeordnet ist und zwei dem Dehnstoffarbeitselement (5) zugewandte elektrische Steckkontakte (13,15) zum Anschluss an den Heizwiderstand (6) aufweist und der Stecker (3) über eine Rastverbindung oder einen Federbügel mechanisch mit der Steckerhülse (4) und/oder dem Thermostatgehäuseteil (2) verbindbar ist.

8. Thermostatventil nach Anspruch 6 oder 7,
**dadurch gekennzeichnet, dass**
- die ersten und zweiten Steckkontakte (13,15) unterschiedlich ausgebildet sind, so dass der Stecker (3) als Adapter dient, und/oder
- die ersten und zweiten Steckkontakte (13,15) zueinander abgewinkelt sind.

9. Thermostatventil nach einem der Ansprüche 5 oder 8,
**dadurch gekennzeichnet, dass**
- die zwei ersten Steckkontakte (13,15) jeweils zwei Kontaktfedern (17) aufweisen, in die am Heizwiderstand (6) angeordnete Rundstecker (16) oder Flachstecker elektrisch leitend einsteckbar sind, und/oder
- der Stecker (3) in Kunststoff eingebettete Blechstanzteile (18) aufweist, die an ihren Längsenden die ersten und zweiten Steckkontakte (13,15) aufweisen.

10. Thermostatventil nach einem der vorhergehenden Ansprüche,
**dadurch gekennzeichnet, dass**
der Stecker (3) und das Dehnstoffelement (5) jeweils kraft- oder formschlüssig in der Steckerhülse (4) einsteckbar sind.

11. Thermostatventil nach einem der vorhergehenden Ansprüche,
**dadurch gekennzeichnet, dass**
das Thermostatgehäuseteil (2) aus Metall oder aus Kunststoff ausgebildet ist.

12. Kältekreislauf oder Kühlkreislauf in einem Kraftfahrzeug mit einem Thermostatventil (1) nach einem der vorhergehenden Ansprüche.

## Claims

1. Thermostat valve (1),
- with a thermostat housing part (2), a plug (3), a plug sleeve (4) and a flexible-material element (5) with a heating resistor (6),
- wherein the plug (3) and the flexible-material element (5) can be inserted into the plug sleeve (4) via a tight, mechanical plug connection and form an assembly (7) together with said plug sleeve, said assembly can be inserted into the thermostat housing part (2) via a further, tight mechanical plug connection,
- wherein the plug (3) and the heating resistor (6) are connected to one another in an electrically-conductive manner in the state in which they are inserted into one another,
- wherein at least one seal (8) is provided on the plug (3), on the plug sleeve (4) and/or on the flexible-material element (5), said seal enables the assembly (7) to be tightly connected with the thermostat housing part (2) and/or to be tightly inserted into the thermostat housing part (2),
**characterised in that**
at least one of the seals (8) is designed as a moulded-on seal.

2. Thermostat valve according to claim 1,
**characterised in that**
the flexible-material element (5) is drivingly-connected to a slider (9) and/or to a valve disc (10), wherein a seal (8) is arranged between the plug sleeve (4) and the slider (9).

3. Thermostat valve according to claim 1 or 2,
**characterised in that**
- the plug (3) and the plug sleeve (4) are designed as a plastic injection moulded part, in particular as a two-component injection moulded part, and/or
- at least the plug sleeve (5) is designed from a fibre-reinforced plastic, in particular from glass fibre-reinforced polyphtalamide (PPA), polyhexamethylene dodecanamide (PA6.12) or polyphenylene ether (PPE).

4. Thermostat valve according to any one of claims 1 to 3,
**characterised in that**
at least one seal (8) is designed from hydrated acrylnitril-butadien rubber (HNBR), from fluororubber (FKM) or from ethylene propylene diene rubber (EPDM).

5. Thermostat valve according to any one of the preceding claims,
**characterised in that**
- the plug (3) and/or the flexible-material element (5) are mechanically fixed in the plug sleeve (4) via a snap connection and/or
- the plug sleeve (4) is mechanically fixed in the thermostat housing part (2) via a snap connection or a bayonet lock, and/or
- the plug (3) is mechanically fixed to the thermostat housing part (2) via a spring clamp (12).

6. Thermostat valve according to any one of the preceding claims,
**characterised in that**
the plug (3) has two first electric plug contacts (13) facing the flexible-material element (5) to connect to the heating resistor (6) of the flexible-material element (5) and two second electric plug contacts (15) facing away from the flexible-material element to connect to a cable tree.

7. Thermostat valve according to any one of claims 1 to 6,
**characterised in that**
the plug (3) is arranged on a cable tree and has two electric plug contacts (13, 15) facing the flexible-material element (5) to connect to the heating resistor (6) and the plug (3) can be mechanically connected via a snap connection or a spring clamp to the plug sleeve (4) and/or to the thermostat housing part (2).

8. Thermostat valve according to claim 6 or 7,
**characterised in that**
- the first and second plug contacts (13, 15) are designed differently such that the plug (3) serves as an adapter and/or
- the first and second plug contacts (13, 15) are wound together.

9. Thermostat valve according to any one of claims 5 or 8,
**characterised in that**
- the two first plug contacts (13, 15) have two contact springs (17) into which round plugs (16) or flat plugs arranged on the heating resistor (6) can be inserted in an electrically-conductive manner and/or
- the plug (3) has sheet metal stamping (18) embedded in plastic which comprise the first and second plug contacts (13, 15) at their longitudinal ends.

10. Thermostat valve according to any one of the preceding claims, **characterised in that** the plug (3) and the flexible-material element (5) can be inserted in the plug sleeve (4) in a force-locking or positive-locking manner.

11. Thermostat valve according to any one of the preceding claims, **characterised in that** the thermostat housing part (2) is designed from metal or from plastic.

12. Refrigeration circuit or cooling circuit in a motor vehicle with a thermostat valve (1) according to any one of the preceding claims.

## Revendications

1. Vanne thermostatique (1),
- avec une partie de boîtier de thermostat (2), une fiche (3), une douille de fiche (4) et un élément de travail expansible (5) avec une résistance chauffante (6),
- dans laquelle la fiche (3) et l'élément de travail expansible (5) peuvent être enfichés respectivement par l'intermédiaire d'une liaison d'enfichage mécanique hermétique dans la douille de fiche (4) et forment conjointement avec celle-ci un ensemble (7) qui peut être enfiché par l'intermédiaire d'une autre liaison d'enfichage mécanique hermétique dans la partie de boîtier de thermostat (2),
- dans laquelle la fiche (3) et la résistance chauffante (6) sont reliées entre elles de manière à conduire l'électricité dans un état enfiché l'une dans l'autre,
- dans laquelle sur la fiche (3), sur la douille de fiche (4) et/ou sur l'élément de travail expansible (5) respectivement au moins une garniture (8) est prévue, laquelle permet un raccordement entre ceux-ci hermétique et/ou un enfichage hermétique de l'ensemble (7) dans la partie de boîtier de thermostat (2),
**caractérisée en ce qu'**au moins une des garnitures (8) est réalisée sous forme de garniture moulée par injection.

2. Vanne thermostatique selon la revendication 1,
**caractérisée en ce que**
l'élément de travail expansible (5) est relié en entraînement à un tiroir (9) et/ou une tête de vanne (10), dans laquelle une garniture (8) est agencée entre la douille de fiche (4) et le tiroir (9).

3. Vanne thermostatique selon la revendication 1 ou 2,
**caractérisée en ce que**
- la fiche (3) et la douille de fiche (4) sont réalisées sous forme de partie moulée par injection en matière plastique, en particulier sous forme de partie moulée par injection à deux composants, et/ou
- au moins la douille de fiche (5) est réalisée en une matière plastique renforcée de fibres, en particulier en polyphthalamide (PPA) renforcé de fibres, polyhexaméthylènedodécanediamide (PA6.12) ou polyphénylèneéther (PPE).

4. Vanne thermostatique selon l'une quelconque des revendications 1 à 3,
**caractérisée en ce que**
au moins une garniture (8) est réalisée en caoutchouc d'acrylonitrile-butadiène (HNBR) hydrogéné, en caoutchouc fluoré (FKM) ou en caoutchouc d'éthylène-propylène-diène (EPDM).

5. Vanne thermostatique selon l'une quelconque des revendications précédentes,
**caractérisée en ce que**
- la fiche (3) et/ou l'élément de travail expansible (5) sont fixés par l'intermédiaire d'une liaison d'encliquetage mécaniquement dans la douille de fiche (4), et/ou
- la douille de fiche (4) est fixée par l'intermédiaire d'une liaison d'encliquetage ou d'une fermeture à baïonnette mécaniquement dans la partie de boîtier de thermostat (2), et/ou
- la fiche (3) est fixée par l'intermédiaire d'un étrier de ressort (12) mécaniquement sur la partie de boîtier de thermostat (2).

6. Vanne thermostatique selon l'une quelconque des revendications précédentes,
**caractérisée en ce que**
la fiche (3) présente deux premiers contacts à fiche (13) électriques tournés vers l'élément de travail expansible (5) pour le raccordement à la résistance chauffante (6) de l'élément de travail expansible (5) et deux seconds contacts à fiche (15) électriques éloignés de celui-ci pour le raccordement à un faisceau de câble.

7. Vanne thermostatique selon l'une quelconque des revendications 1 à 6,
**caractérisée en ce que**
la fiche (3) est agencée sur un faisceau de câble et présente deux contacts à fiche (13, 15) électriques tournés vers l'élément de travail expansible (5) pour le raccordement à la résistance chauffante (6) et la fiche (3) peut être reliée par l'intermédiaire d'une liaison d'encliquetage ou d'un étrier de ressort mécaniquement à la douille de fiche (4) et/ou à la partie de boîtier de thermostat (2).

8. Vanne thermostatique selon la revendication 6 ou 7,
**caractérisée en ce que**
- les premier et second contacts à fiche (13, 15) sont réalisés différemment de sorte que la fiche (3) serve d'adaptateur, et/ou
- les premier et second contacts à fiche (13, 15) sont coudés l'un par rapport à l'autre.

9. Vanne thermostatique selon l'une quelconque des revendications 5 ou 8,
**caractérisée en ce que**
- les deux premiers contacts à fiche (13, 15) présentent respectivement deux ressorts de contact (17), dans lesquels des fiches rondes (16) ou des fiches plates agencées sur la résistance chauffante (6) sont enfichables de manière à conduire l'électricité, et/ou
- la fiche (3) présente des parties en tôle découpées (18) intégrées en matière plastique, qui présentent sur leurs extrémités longitudinales les premier et second contacts à fiche (13, 15).

10. Vanne thermostatique selon l'une quelconque des revendications précédentes,
**caractérisée en ce que**
la fiche (3) et l'élément expansible (5) sont enfichables respectivement à force ou à complémentarité de formes dans la douille de fiche (4).

11. Vanne thermostatique selon l'une quelconque des revendications précédentes,
**caractérisée en ce que**
la partie de boîtier de thermostat (2) est réalisée en métal ou en matière plastique.

12. Circuit de réfrigération ou circuit de refroidissement dans un véhicule automobile avec une vanne thermostatique (1) selon l'une quelconque des revendications précédentes.
